# EUROPÄISCHE PATENTSCHRIFT

(11) **EP 0 576 881 B1**
(45) Veröffentlichungstag und Bekanntmachung des Hinweises auf die Patenterteilung: **22.11.1995**
(21) Anmeldenummer: 93109197.9
(22) Anmeldetag: 08.06.1993
(51) Int. Cl.: B29C 45/17

(54) **Herstellung von Spritzgussteilen aus thermoplastischen Kunststoffen**
Manufacture of injection moulded articles from thermoplastic materials
Fabrication de pièces moulées par injection en matières thermoplastiques

(30) Priorität: 17.06.1992 DE 4219915
(43) Veröffentlichungstag der Anmeldung: 05.01.1994
(73) Patentinhaber: Linde Aktiengesellschaft, 65189 Wiesbaden (DE)
(72) Erfinder: Dannenhaus, Peter, Dipl.-Ing., D-4800 Bielefeld (DE); Klane, Bernd, Dipl.-Ing., D-8000 München 70 (DE)
(74) Vertreter: Kasseckert, Rainer

(56) Entgegenhaltungen:
- WO-A-91/14559
- DE-A- 2 440 193
- DE-A- 3 925 909
- DE-A- 4 024 549

## Beschreibung

Die Erfindung betrifft ein Verfahren zur Herstellung von Spritzgußteilen aus thermoplastischen Kunststoffen, bei dem eine Kunststoffschmelze mittels eines unter hohen Druck injizierten Gases in eine Form gepreßt wird und der Kunstoff mittels eines kühlen Mediums abgekühlt wird. Ein derartiges verfahren ist beispielsweise aus der DE-40 24 549 A1 bekannt. Dort wird vorgeschlagen, in Anschluß an das bekannte Gasinnendruckverfahren, bei dem Kunststoffschmelze in eine Form gespritzt und durch unter hohen Druck in die Kunststoffschmelze injiziertes Gas der plastische Kunststoff auf die Innenwände der Form gepreßt wird und dort erstarrt, die nach Abschluß des Formbildungsprozesses entstandenen Hohlräume mit einem kühlen Medium zu spülen. Dazu werden in den geformten Kunststoffhohlkörper eine Einlaß- und eine Auslaßöffnung für das kühle Medium, insbesondere Kohlendioxidgas, gestochen und der Innenraum mit niedrigem, konstantem Überdruck gespült.

Ein derartiges Verfahren hat jedoch mehrere Nachteile: Zunächst werden mehrere, meist drei Einstichöffnungen für die verwendeten Gase benötigt. Diese Einstichöffnungen bleiben am fertiggestellten Formteil sichtbar. Dann werden zwei verschiedene Gase für den Ausformungs- und den Abkühlprozeß verwendet, wodurch aufwendige Einrichtungen zur Bereitstellung und Versorgung mit verschiedenen Gasen notwendig sind. Weiterhin erfolgt das Abkühlen des Kunststofformkörpers durch ständiges Spülen, wodurch große Mengen an Gas, insbesondere Kohlendioxid, verbraucht werden, die nur unter großem Aufwand zurückgewonnen werden können. Außerdem hat sich gezeigt, daß bei Verwendung von Kohlendioxid für den Abkühlprozeß beim Ausströmen des CO₂-Gases durch die Auslaßöffnung aufgrund der resultierenden Entspannung des Gases große Mengen Kohlendioxid-Schnee entstehen. Dieser Schnee kann jedoch der Kunststoffmasse im Formteil keine Wärme mehr entziehen. Schließlich wird bei dem geschilderten Verfahren das kühle Medium erst im wesentlichen nach dem Abschluß des Formbildungsprozesses zur Formteilkühlung verwendet. Dadurch kann der Formbildungsprozeß an sich durch die Abkühlung nicht verkürzt werden.

Aufgabe vorliegender Erfindung besteht folglich darin, den Herstellungsprozeß von Spritzgußteilen aus thermoplastischen Kunststoffen zu vereinfachen, den Abkühlungsprozeß zu verbessern, den Gasverbrauch zu senken und die Produktionszeit zu verkürzen.

Diese Aufgabe wird erfindungsgemäß dadurch gelöst, daß während der Erstarrungsphase der Kunststoffschmelze ein Kaltgas unter gesteuertem Druckwechsel in das Forminnere eingeleitet wird.

Durch das erfindungsgemäße Verfahren wird es möglich, bereits während der Erstarrungsphase des Kunststoffs mit dem Abkühlprozeß zu beginnen. Dazu wird noch vor Abschluß des Formbildungsprozesses Kaltgas unter hohem Druck in das Forminnere eingeleitet. Nach einer vorbestimmten Zeit wird der Druck abgesenkt, wodurch sich das erwärmte Gas im Forminneren abkühlt und nochmals dem Kunststofformteil Wärme entziehen kann. Die Druckabsenkung darf bis zum Abschluß der Erstarrungsphase selbstverständlich nur bis zu einem Druck erfolgen, bei dem der noch plastische Kunststoff an die innenwände der Form gepreßt bleibt. Anschließend wird der Druck wieder erhöht. Dieser gesteuerte Druckwechsel wird bis zum Ende der Abkühlphase fortgesetzt, woraufhin das Kunststofformteil entformt wird. Durch die immer wieder stattfindende Druckabsenkung beim erfindungsgemäßen Verfahren wird im gesamten Forminnenraum eine Temperaturabsenkung durch Entspannung des dort befindlichen Gases erzielt und somit findet eine stärkere Ausnutzung des Kältepotentials des Kaltgases statt als bei konstanter Spülung mit Kaltgas. Außerdem lassen sich die Mengen an zur Abkühlung des Formteils notwendigem Kaltgas senken und die Abkühlzeit herabsetzen.

Da das Kaltgas mit hohem, über dem mindestens notwendigen Anpreßdruck des Kunststoffes an die Forminnenwand liegenden Druck in das Forminnere geleitet wird, erlaubt das erfindungsgemäße Verfahren bereits vor Abschluß der Erstarrungsphase mit der Abkühlphase zu beginnen. Dadurch wird die Zykluszeit der Herstellungsmaschine für die Spritzgußteile verkürzt und die Wirtschaftlichkeit des Verfahrens weiter gesteigert.

Weiterhin erlaubt das erfindungsgemäße Verfahren mit nur einer Einlaßöffnung für das in das Forminnere geleitete Kaltgas auszukommen. Über diese Öffnung kann die Steuerung des Druckwechsels erfolgen. Die Öffnung dient dann als Ein- und Auslaßöffnung für das Kaltgas. Natürlich lassen sich auch die beiden Phasen Druckerhöhung und Druckabsenkung durch zwei getrennte Öffnungen, d.h. eine Einlaß- und eine Auslaßöffnung, steuern.

Dabei kann es vorteilhaft sein, wenn der Druck des in das Forminnere geleiteten Kaltgases periodisch verändert wird. Um der fortschreitenden Verfestigung der Kunststofform Rechnung zu tragen, kann dabei der Druckmittelwert des periodischen Druckwechsels zeitlich abgesenkt werden.

Besonders vorteilhaft ist die Verwendung eines inerten Gases, vorzugsweise Stickstoff, für das in die Kunststoffschmelze injizierte Gas und für das Kaltgas. Die inerten Gase, wie Stickstoff, Kohlendioxid, Argon und Helium lassen den Kunststoff chemisch unverändert und sind in großen Druck- und Temperaturbereichen problemlos zu verwenden. Da meist Stickstoff als das Gas verwendet wird, das mit hohem Druck in die in der Form befindlichen Kunststoffschmelze injiziert wird, bietet es sich beim erfindungsgemäßen Verfahren an, auch als Kaltgas Stickstoff zu verwenden. Dazu kann Stickstoff, nachdem er zur Ausformung der Kunststoffschmelze verwendet worden ist, aus demselben Vorratsbehälter entnommen, abgekühlt und als Kaltgas in das Forminnere geleitet werden. Bei dieser Variante des erfindungsgemäßen Verfahrens lassen sich die Einlaßöffnung samt Einlaßleitung sowohl für den Formbildungsprozeß als auch für den Abkühlprozeß verwenden. Es ist dann auch nicht mehr nötig, weitere Öffnungen in die Kunststofform zu stoßen.

Bevorzugt wird der Druckwechsel des in das Forminnere geleiteten Kaltgases in einem Bereich von 1 bis 350 bar, vorzugsweise von 10 bis 250 bar, gesteuert. Während der Erstarrungsphase wird der Druckwechsel mit höheren Mittelwerten ausgeführt, um den notwendigen Anpreßdruck zu gewährleisten, nach der Erstarrungsphase kann der Mittelwert des Druckwechsels niedriger eingestellt werden.

Günstig sind während der Erstarrungsphase Druckmittelwerte um 200 bar, nach der Erstarrungsphase kann dieser Mittelwert um bis zu 100 bar gesenkt werden. Geeignete Amplituden des Druckwechselverlaufs liegen zwischen 50 und 100 bar.

Für die Verwendung von Stickstoff als Kaltgas lassen sich hier die folgenden, für das Verfahren relevanten Stoffwerte angeben: Die spezifische Wärmekapazität bei konstantem Druck liegt für Stickstoff mit -140° C und 200 bar bei 1,95 kJ/kg K, die Wärmeleitfähigkeit bei 0,086 W/m K. Die entsprechenden Werte für Stickstoff mit ebenfalls -140° C aber nur 10 bar liegen bei 1,21 kJ/kg K und 0,0132 W/m K. Offensichtlich ist demnach kalter Stickstoff bei hohem Druck für das erfindungsgemäße Verfahren besser geeignet als bei niedrigem Druck.

Das in das Formteil eingeleitete Kaltgas kann durch Wärmetausch mit einem tiefkalten Medium abgekühlt werden. Beispielsweise bietet es sich bei der Verwendung von Stickstoff als Kaltgas an, den Stickstoff durch direkten und/oder indirekten Wärmetausch mit verflüssigtem Stickstoff abzukühlen.

Allgemein eignen sich für das erfindungsgemäße Verfahren Kaltgastemperaturen im Bereich von -160 bis 0° C, bei der Verwendung von Stickstoff wird aus den genannten Gründen vorzugsweise eine Temperatur von -140° C bis -120° C gewählt.

Wie bereits erwähnt, ist es möglich, das in die Kunststoffschmelze injizierte Gas für den Formgebungsprozeß und das Kaltgas für den Abkühlprozeß über dieselbe Einlaßöffnung in das Forminnere einzuleiten. Insbesondere bietet sich dies an, wenn es sich bei beiden Gasen um Stickstoff handelt. Der zur Formgebung verwendete Stickstoff wird einem Vorratsbehälter entnommen, in dem gasförmiger Stickstoff unter hohem Druck vorliegt. In der Abkühlphase eingesetzter Stickstoff wird durch direkten und/oder indirekten Wärmetausch auf die gewünschte Temperatur abgekühlt. Eine zweite, für eine Spülung mit Gas notwendige Auslaßöffnung ist hierbei nicht unbedingt erforderlich. In den Entspannungsphasen des Druckwechsels kühlt das Gas im Inneren der Kunststofform nämlich überall gleichmäßig ab, so daß auf eine Spülung verzichtet werden kann.

Der Druckwechsel des Kaltgases im Forminnern wird am einfachsten durch Öffnen und Schließen einer Einlaß- und/oder Auslaßöffnung für das Kaltgas gesteuert. Entsprechend dem erfindungsgemäßen Verfahren wird zunächst kaltes Gas unter hohem Druck durch die Einlaßöffnung in das Forminnere geleitet, verbleibt dort eine gewisse Zeit bis eine genügend große Wärmemenge dem Kunststofformteil entzogen worden ist und wird dann durch Öffnen der Einlaßöffnung oder einer zusätzlich angebrachten Auslaßöffnung zum Teil aus dem Forminneren entfernt, wodurch sich das erwärmte Gas aufgrund Entspannung abkühlt. In der wiederum verschlossenen Form verbleibt dieses abgekühlte Gas ein weiteres Zeitintervall. Dieser Entspannungsphase des Gases schließt sich eine weitere Druckphase durch erneutes Einleiten von Kaltgas an.

Vorzugsweise wechseln sich Druck- und Entspannungsphasen periodisch ab. Während des Herstellungsprozesses des Spritzgußteils sollten mindestens zwei Perioden durchlaufen werden. Nach dem Einleiten von Kaltgas während der Erstarrungsphase der Kunststoffschmelze, also etwa 15 s nach Einspritzen der Schmelze in die Form, werden noch etwa 30 s für die Abkühlphase, d.h. die gewünschte Anzahl von Perioden des Druckwechsels, benötigt, bis das Kunststoffteil entformt werden kann. Eine Periodendauer von 15 s entspricht demnach zwei, eine Periodendauer von 1 s 30 Druckwechselperioden. Zwischen 4 und 10 aufeinanderfolgende Druckwechselperioden, d.h. eine Periodendauer im Bereich von 3 bis 7 s, erweisen sich als besonders günstig.

Im folgenden soll ein Ausführungsbeispiel das erfindungsgemäße Verfahren näher erläutern.

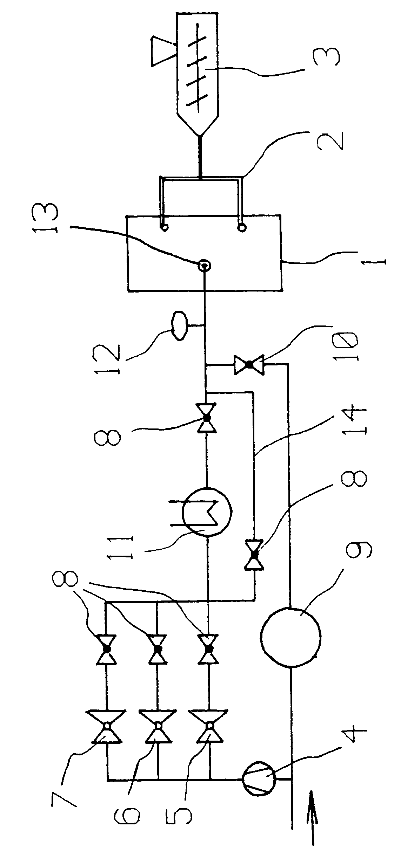

Die einzige Figur zeigt schematisch den Aufbau einer zur Herstellung von Spritzgußteilen unter Einsatz des erfindungsgemäßen Verfahrens geeigneten Anlage.

Die thermoplastische Kunststoffmasse wird mittels eines Extruders 3 über die Leitung 2 in die Form 1 eingeleitet. In diese Form 1 wird anschließend gasförmiger Stickstoff über die Einlaßöffnung 13 injiziert.

Dazu wird einem nicht dargestellten Vorratsbehälter Stickstoff entnommen und vom Kompressor 4 auf 350 bar verdichtet. Zwei Druckreduzierventile 5, 6 senken den Druck auf 220 bzw. 210 bar. In diesen beiden Druckstufen wird gasförmiger Stickstoff in die Kunststoffschmelze eingeblasen, die an die Forminnenwände gepreßt wird. Die Ventile 8 dienen dem Öffnen und Schließen der betreffenden Leitungen. Der Wärmetauscher 11 sorgt für die gewünschte Gastemperatur, die zunächst bei Raumtemperatur oder darüber liegt. In dieser Phase kann deshalb von dem Einsatz eines Wärmetauschers 11 abgesehen und das Gas über die Bypass-Leitung 14 zur Einlaßöffnung 13 geleitet werden.

Bei bisher bekannten Verfahren beträgt die Einfüllzeit der Kunststoffschmelze in die Form 1 etwa 2 s, die Injektion des Stickstoffs in zwei Druckstufen etwa 5 s. Nach weiteren ca. 19 s, in denen die geformte Kunststoffschmelze im wesentlichen erstarrt ist, wird der erwärmte Stickstoff durch das Ventil 10 in den Speicherpuffer 9 abgelassen. Daraufhin folgt beispielsweise eine ca. 25 s dauernde Spülung bei niedrigem Druck mit kaltem Gas (Kohlendioxid), nach der das Kunststoffteil entformt werden kann. Der Herstellungsprozeß eines Spritzgußteils nimmt bei einem derartigen Verfahren etwa 55 bis 60 s in Anspruch. Als Abfall entstehen große Mengen sublimierenden CO₂-Schnees, der sowohl als Kältemittel wie auch für die Rückgewinnung verloren ist.

Mit dem erfindungsgemäßen Verfahren kann die Herstellungszeit um etwa 10 s verkürzt werden. Dies liegt im wesentlichen darin begründet, daß etwa in der Mitte der Erstarrungsphase, also etwa 15 s nach Einspritzen der Kunststoffschmelze in die Form 1 erfindungsgemäß Kaltgas in das Forminnere unter Hochdruck eingeleitet wird. In diesem Beispiel wird Stickstoff mit 200 bar und -130° C über die Einlaßöffnung 13 in die Form 1 eingebracht. Der Stickstoff wird mittels Wärmetauscher 11 von darin zirkulierendem flüssigen Stickstoff abgekühlt. Die Temperatur kann mittels Temperaturregler 12 eventuell durch Zumischen von wärmeren Stickstoff aus dem Speicherpuffer 9 konstant gehalten werden. Nach etwa 3 s wird die Einlaßöffnung 13 geöffnet und der Stickstoff strömt über Ventil 10 zurück in den Speicherpuffer 9. Das Gas im Speicherpuffer 9 kann nach Verdichtung durch den Kompressor 4 wiederverwendet werden. Die resultierende Entspannung kühlt das Gas im Forminneren nochmals ab, wodurch auch noch in der Entspannungsphase dem Formteil Wärme entzogen werden kann. Dabei ist es wichtig, den Druck ständig über dem jeweils mindestens notwendigen Anpreßdruck des noch plastischen Kunststoffs an die Forminnnenwände zu halten. Nach weiteren 3 s wird wieder Kaltgas, Stickstoff bei 200 bar und -130° C, in das Forminnere eingeleitet. Nach 5 Perioden des geschilderten Druckwechsels kann das Formteil entnommen werden.

Die Herstellungszeit beträgt unter Einsatz des erfindungsgemäßen Verfahrens somit in etwa 45 bis 50 s. Weitere Vorteile des erfindungsgemäßen Verfahrens sind in der bequemen Wiederverwendbarkeit des eingesetzten Gases und im Fehlen mehrerer Gaszufuhröffnungen begründet.

## Patentansprüche

1. Verfahren zur Herstellung von Spritzgußteilen aus thermoplastischen Kunststoffen, bei dem eine Kunststoffschmelze mittels eines unter hohen Druck injizierten Gases in eine Form gepreßt wird und der Kunststoff mittels eines kühlen Mediums abgekühlt wird, **dadurch gekennzeichnet**, daß während der Erstarrungsphase der Kunststoffschmelze ein Kaltgas unter gesteuertem Druckwechsel in das Forminnere eingeleitet wird.

2. Verfahren nach Anspruch 1, **dadurch gekennzeichnet**, daß der Druck des in das Forminnere geleiteten Kaltgases periodisch verändert wird.

3. Verfahren nach den Ansprüchen 1 oder 2, **dadurch gekennzeichnet**, daß als in die Kunststoffschmelze injiziertes Gas und als Kaltgas ein inertes Gas, vorzugsweise Stickstoff, verwendet wird.

4. Verfahren nach einem der Ansprüche 1 bis 3, **dadurch gekennzeichnet**, daß der Druckwechsel des in das Forminnere geleiteten Kaltgases in einem Bereich von 1 bis 350 bar, vorzugsweise von 10 bis 200 bar, gesteuert wird.

5. Verfahren nach einem der Ansprüche 1 bis 4, **dadurch gekennzeichnet**, daß das in das Forminnere eingeleitete Kaltgas durch Wärmetausch mit einem tiefkalten Medium abgekühlt wird.

6. Verfahren nach Anspruch 5, **dadurch gekennzeichnet**, daß als tiefkaltes Medium verflüssigter Stickstoff eingesetzt wird.

7. Verfahren nach einem der Ansprüche 1 bis 6, **dadurch gekennzeichnet**, daß die Temperatur des Kaltgases auf einen Wert im Bereich von -160 bis 0°C, vorzugsweise von -140 bis -120°C, geregelt wird.

8. Verfahren nach einem der Ansprüche 1 bis 7, **dadurch gekennzeichnet**, daß das in die Kunststoffschmelze injizierte Gas und das Kaltgas über dieselbe Einlaßöffnung in das Forminnere eingeleitet werden.

9. Verfahren nach einem der Ansprüche 1 bis 8, **dadurch gekennzeichnet**, daß der Druckwechsel des Kaltgases im Forminneren durch Öffnen und Schließen einer Einlaß- und/oder Auslaßöffnung für das Kaltgas gesteuert wird.

10. Verfahren nach einem der Ansprüche 2 bis 9, **dadurch gekennzeichnet**, daß die Periodendauer des periodischen Druckwechsels im Bereich von 1 bis 15 Sekunden, vorzugsweise 3 bis 7 Sekunden, gewählt wird.

## Claims

1. Process for the manufacture of injection-mouldings from thermoplastic plastics, whereby a plastic melt is pressed into a mould by means of a gas injected at high pressure and the plastic is cooled by means of a cool medium, characterised in that during the plastic melt solidification phase a cold gas is introduced into the interior of the mould with controlled changes in pressure.

2. Process according to claim 1, characterised in that the pressure of the cold gas introduced into the interior of the mould is periodically changed.

3. Process according to claim 1 or 2, characterised in that an inert gas, preferably nitrogen, is used as the gas injected into the plastic melt and as the cold gas.

4. Process according to one of claims 1 to 3, characterised in that the change in pressure of the cold gas introduced into the interior of the mould is controlled in a range from 1 to 350 bar, preferably from 10 to 200 bar.

5. Process according to one of claims 1 to 4, characterised in that the cold gas introduced into the interior of the mould is cooled by heat exchange with a low-temperature medium.

6. Process according to claim 5, characterised in that liquefied nitrogen is used as the low-temperature medium.

7. Process according to one of claims 1 to 6, characterised in that the temperature of the cold gas is regulated to a value in the range from -160 to 0°C, preferably from -140 to -120°C.

8. Process according to one of claims 1 to 7, characterised in that the gas injected into the plastic melt and the cold gas are introduced into the interior of the mould through the same inlet opening.

9. Process according to one of claims 1 to 8, characterised in that the change in pressure of the cold gas in the interior of the mould is controlled by opening and closing an inlet and/or outlet opening for the cold gas.

10. Process according to one of claims 2 to 9, characterised in that the length of the period of the periodic change in pressure is selected in the range from 1 to 15 seconds, preferably 3 to 7 seconds.

## Revendications

1. Procédé de fabrication de pièces moulées par injection en matière thermoplastique, dans lequel on presse une masse fondue de matière plastique au moyen d'un gaz injecté sous haute pression dans un moule et on refroidit la matière plastique au moyen d'un agent de refroidissement, procédé caractérisé en ce que pendant la phase de figeage de la masse fondue de matière plastique, on introduit un gaz froid à l'intérieur du moule en commandant le changement de pression.

2. Procédé selon la revendication 1, caractérisé en ce que la pression du gaz froid introduit à l'intérieur du moule est modifiée périodiquement.

3. Procédé selon les revendications 1 ou 2, caractérisé en ce que l'on utilise comme gaz injecté dans la masse fondue de matière plastique et comme gaz froid un gaz inerte, de préférence de l'azote.

4. Procédé selon l'une des revendications 1 à 3, caractérisé en ce que le changement de pression du gaz froid introduit à l'intérieur du moule est réglé dans une zone comprise entre 1 et 350 bars, de préférence entre 10 et 200 bars.

5. Procédé selon l'une des revendications 1 à 4, caractérisé en ce que le gaz froid introduit à l'intérieur du moule est refroidi par échange de chaleur avec un agent à basse température.

6. Procédé selon la revendication 5, caractérisé en ce que l'on utilise comme agent à basse température de l'azote liquifié.

7. Procédé selon l'une des revendications 1 à 6, caractérisé en ce que l'on règle la température du gaz froid à une valeur comprise dans la zone de -160° à 0°C, de préférence de -140 à -120°C.

8. Procédé selon l'une des revendications 1 à 7, caractérisé en ce que le gaz injecté dans la masse fondue de matière plastique et le gaz froid sont introduits par le même orifice d'entrée à l'intérieur du moule.

9. Procédé selon l'une des revendications 1 à 8, caractérisé en ce que le changement de pression du gaz froid à l'intérieur du moule est commandé par l'ouverture et la fermeture d'un orifice d'entrée et/ou d'un orifice de sortie pour le gaz froid.

10. Procédé selon l'une des revendications 2 à 9, caractérisé en ce que la durée du changement périodique de la pression est choisie dans la zone comprise entre 1 et 15 secondes, de préférence entre 3 et 7 secondes.
